# EUROPEAN PATENT SPECIFICATION

(11) **EP 3 255 327 B1**
(45) Date of publication and mention of the grant of the patent: **03.04.2019**
(21) Application number: 16305671.6
(22) Date of filing: 08.06.2016
(51) Int. Cl.: F16L 11/08, B29C 53/58, B29C 65/58, B29C 65/00, B29C 53/78

(54) **FLEXIBLE PIPE AND RELATED MANUFACTURING METHOD**
FLEXIBLES ROHR UND ZUGEHÖRIGES HERSTELLUNGSVERFAHREN
TUYAU SOUPLE ET PROCÉDÉ DE FABRICATION ASSOCIÉ

(43) Date of publication of application: 13.12.2017
(73) Proprietor: Technip France, 92400 Courbevoie (FR)
(72) Inventor: GUIMARAES, Alessandro, RIO DE JANEIRO (BR); VIGNOLES, Mario Alfredo, RIO DE JANEIRO (BR)
(74) Representative: Lavoix

(56) References cited:
- EP-A1- 1 663 637
- EP-A1- 2 354 289
- WO-A1-2015/139708
- FR-A1- 2 531 002

## Description

The present invention relates to a flexible pipe comprising:
- at least a sheath defining a central passage for conveying fluids,
- at least a reinforcing layer around the sheath,
- at least a fluid permeation barrier comprising a fluid barrier tape, the fluid barrier tape having a cylindrical shape and defining at least an overlapping region between an exterior edge of the fluid barrier tape and an interior edge of the fluid barrier tape.

The pipe is in particular a flexible pipe of a type that is not bonded ("unbonded") intended for use in the transportation of hydrocarbons across a body of water, such as an ocean, a sea, a lake or a river.

Alternatively, the pipe is a bonded flexible pipe.

Such a pipe is for example manufactured in accordance with the standards API 17J (Specification for Unbonded Flexible Pipe) and API RP 17B (Recommended Practice for Flexible Pipe) established by the American Petroleum Institute.

The pipe is generally formed of a plurality of layers that are concentric and superposed. It is considered "unbonded" within the scope and purpose of the present invention since at least one of the layers of the pipe is capable of moving longitudinally in relation to the adjacent layers during the bending or flexion of the pipe. In particular, an unbonded pipe is a pipe that is free of any bonding materials that connect the layers forming the pipe.

The pipe is generally disposed across a body of water, between a bottom assembly, designed for collecting the fluid used at the bottom of the body of water and a floating surface assembly designed for collecting and distributing the fluid. The surface assembly may be a semi-submersible platform, an FPSO (Floating Production Storage and Offloading unit) or another floating unit.

These pipes are subjected to very high axial tensile and radial forces, in particular when the body of water in which the pipe is disposed is extremely deep.

In some cases, the fluid which circulates in the pipe contains aggressive gases and liquids. These compounds migrate from the pipe bore, through the polymer sheath, creating an aggressive environment in the annular space containing the metallic wires of the pressure armor layer and the tensile armor layers of the flexible pipe.

This aggressive environment may impair the strength of the armoring layers, reducing the load capacity of the armoring layers and jeopardizing the flexible pipe integrity.

In order to alleviate this problem, EP 1 663 637 B1 describes a fluid permeation barrier located between the pressure sheath and the armoring layers of a flexible pipe according to the preamble of claim 1.

The fluid permeation barrier is composed of a polymer layer and of a film layer, where the film layer is composed of a material layer having a high permeation barrier against the migrating species, in particular a metal layer. The film layer bonded to the polymer layer reduces the amount of the aggressive species migrating from the transported fluid to the annular space containing the armoring layer of the flexible pipe.

However, such fluid permeation barrier is not entirely satisfactory. In order to manufacture the film permeation barrier, it is necessary to tape the film barrier around the carcass and to extrude a polymer layer by following adequate polymer chemical compositions, heating cycles, irradiation cycles and cooling cycles to ensure a proper cross-linking of the polymer layer on the film layer.

This manufacturing process requires additional cumbersome equipment increasing the complexity of the manufacturing line of the flexible pipe.

Moreover, even if an overlapping of the film barrier is provided to increase the permeating strength of the fluid barrier, no specific step is described to avoid the presence of "polymer bridges" linking the inner side of the fluid barrier to the outer side of the polymer barrier, allowing the aggressive species contained in the transported fluid to migrate from the flexible pipe bore. Such a solution is not sufficiently robust to any manufacturing defects affecting film layer taping step.

An object of the invention is therefore to improve the fluid tightness of a fluid permeation barrier, comprising a polymer layer and film barrier layer without requiring additional cumbersome equipment.

To this end, the subject matter of the invention relates to a flexible pipe of the aforementioned type, characterized by a latching system, latching an exterior surface of the overlapping region to an interior surface of the overlapping region.

The flexible pipe according to the invention may comprise one or more of the following features, taken into consideration in isolation or in accordance with any technically possible combination:
- The exterior edge of the overlapping region comprises at least one protrusion and wherein the interior edge of the overlapping region comprises at least one recess;
- At least one protrusion is clipped in at least one recess;
- The exterior surface of the overlapping region defines an exterior shoulder and the interior surface of the overlapping region defines an interior shoulder, the exterior shoulder being engaged in the interior shoulder;
- The overlapping region is flush with adjacent regions on the exterior surface and on the interior surface;
- The fluid barrier tape comprises at least a polymer layer and a metal layer applied on at least one surface of the polymer layer;
- The metal layer is obtainable by Chemical Vapor Deposition;
- The latching system comprises an adhesive layer fixing the exterior surface of the overlapping region to the interior surface of the overlapping region;
- The reinforcing layer is helically wound around the sheath;
- The reinforcing layer comprises at least one layer of wires;
- The flexible pipe comprises at least two unbonded layers.

The subject matter of the invention also relates to a method for manufacturing a flexible pipe, said method including:
- providing a sheath defining a central passage for conveying fluids,
- providing at least a reinforcing layer around the sheath,
- providing at least a fluid permeation barrier comprising a fluid barrier tape, the fluid barrier tape having a cylindrical shape and defining at least an overlapping region between an exterior edge of a fluid barrier tape layer and an interior edge of the fluid barrier tape,
characterized by latching an exterior surface of the overlapping region to an interior surface of the overlapping region by a latching system.

The method according to the invention may include one or more of the following features:
- it comprises winding the fluid barrier tape around the sheath.
- the exterior edge of the overlapping region comprises at least one protrusion and the interior edge of the overlapping region comprises one recess, said method comprises inserting at least one protrusion of the exterior edge in at least one recess of the interior edge at the overlapping region.

The invention will be better understood upon reading the description which will follow, given solely by way of example, and with reference being made to the accompanying drawings in which:
- Figure 1 is a partially stripped down perspective view of a section of a flexible pipe which includes a fluid permeation barrier layer;
- Figure 2 is a perspective view of the fluid permeation barrier;
- Figure 3 is a cross section of an overlapping region of the fluid permeation barrier layer before installation;
- Figure 4 is a cross section of an overlapping region of the fluid permeation barrier layer after installation;
- Figure 5 is a view similar to that in Figure 3 of a second overlapping region before installation;
- Figure 6 is a view similar to that in Figure 4 of a second overlapping region after installation;
- Figure 7 is a view similar to that in Figure 3 of a third overlapping region before installation;
- Figure 8 is a view similar to that in Figure 4 of a third overlapping region after installation.

In the following, the terms "exterior" and "interior" are to be understood generally in a radial manner relative to an axis X-X' of the pipe. The term "exterior" is to be understood as being relatively further away radially from the axis X-X' and the term "interior" is to be understood as being relatively closer radially to the axis X-X' of the pipe.

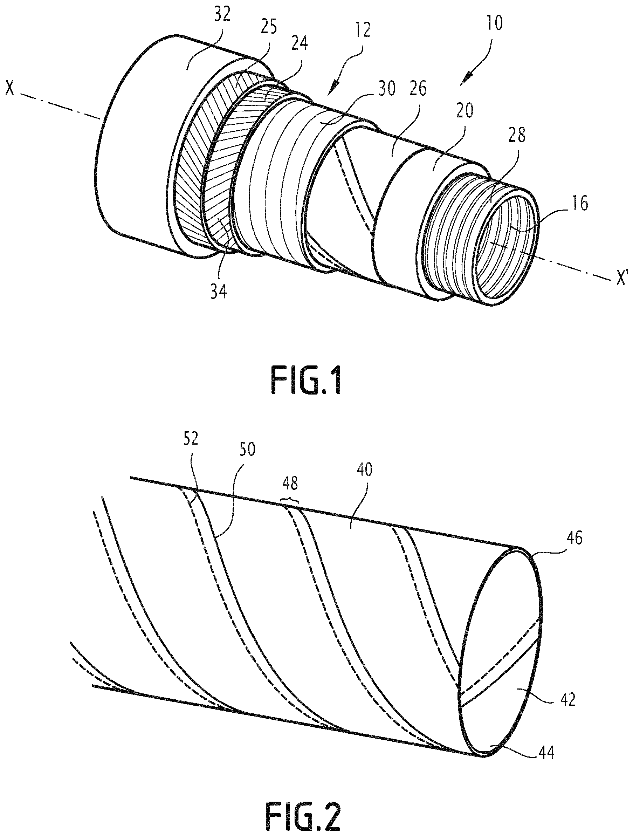

A first flexible pipe 10 according to the invention is partially illustrated in Figure 1.

The flexible pipe 10 comprises a central section 12 illustrated in part in Figure 1.

With reference to Figure 1, the flexible pipe 10 delimits a central passage 16 for circulation of fluid, advantageously a petroleum fluid such as oil and/or natural gas. The fluid contains aggressive compounds such as carbon dioxide and/or hydrogen sulfide. The central passage 16 extends along an axis X-X', between the upstream end and the downstream end of the flexible pipe 10.

The flexible pipe 10 is intended to be disposed across a body of water (not shown) and in an installation for prospecting and exploitation of fluids, in particular hydrocarbons.

The body of water is, for example, a sea, a lake or an ocean. The depth of the body of water in the area of the fluid prospecting and exploitation installation is for example between 500 m and 3,000 m.

The fluid prospecting and exploitation installation includes a surface assembly in particular a floating assembly and a bottom assembly (not represented) which are generally connected to each other by a flexible pipe 10.

The flexible pipe 10 is preferably a pipe that is "not bonded" (referred to by the term "unbonded" as per the accepted English terminology).

At least two adjacent layers of the flexible pipe 10 are free to move longitudinally in relation to each other upon the bending or flexion of the pipe. Advantageously, all of the layers of the flexible pipe 10 are free to move relative to the other. Such a pipe is described for example in the standards API 17J and API RP 17B, published by the American Petroleum Institute (API).

In a variant, the flexible pipe is a bonded flexible pipe.

As illustrated in the Figure 1, the flexible pipe 10 comprises a plurality of concentric layers around the axis X-X', which extends continuously along the central section 12 between the upstream end and the downstream end of the flexible pipe 10.

According to the invention, the flexible pipe 10 comprises at least one first sheath 20 made of a polymer based material that advantageously constitutes a pressure sheath.

The flexible pipe 10 further comprises at least one tensile armor layer 24, 25 disposed externally relative to the first sheath 20.

According to the invention, the flexible pipe 10 comprises a fluid permeating barrier 26 which is here interposed between the pressure sheath 20 and the innermost layer or layers of the tensile armor 24, 25.

Advantageously, and according to the desired use, the flexible pipe 10 in addition comprises an internal carcass 28 disposed on the interior of the pressure sheath 20, a pressure vault 30 interposed between the fluid permeation barrier 26 and the layer or layers of tensile armor 24, 25 and an exterior sheath 32, designed to ensure the protection of the flexible pipe 10.

In a known manner, the pressure sheath 20 is designed to be used for confining in a sealed manner the transported fluid in the central passage 16. It is formed of polymer material, for example based on a polyolefin such as polyethylene, based on a polyamide such as PA11 or PA12, or based on fluorinated polymer such as polyvinylidene fluoride (PVDF).

The thickness of the pressure sheath 20 is for example comprised between 5 mm and 20 mm.

The carcass 28, when it is present, is formed for example of a profiled metal strip that is wound in a spiral. The spiral windings of the strip are advantageously interlocked into each other, which allows for absorbing the radial crushing forces.

In this example, the carcass 28 is disposed within the interior of the pressure sheath 20. The flexible pipe 10 is then referred to as "rough bore" as per the accepted English terminology on account of the geometry of the carcass 28.

By way of a variant (not shown), the flexible pipe 10 is free of any internal carcass 28, it is then referred to as "smooth bore" as per the accepted English terminology.

The helical winding of the profiled metal sheet forming the carcass 28 is short pitched, that is to say that it as a helix angle having an absolute value close to 90°, typically comprised between 75° and 95°.

In this example, the pressure vault 30 is designed to absorb the forces related to the pressure prevailing within the interior of the pressure sheath 20. It is for example formed of a metal profiled wire wound helically around the sheath 20. The profiled wire generally has a complex geometry, in particular having a form shaped like a Z, T, U, K, X or I.

The pressure vault 30 is helically wound with a short pitch around the pressure sheath 20, that is to say, with a helix angle having an absolute value close to 90°, typically comprised between 75° and 90°.

The flexible pipe 10 according to the invention comprises at least one armor layer 24, 25 formed of a helical winding of at least one elongated amour element (wires) 34.

In the example shown in Figure 1, the flexible pipe 10 includes a plurality of reinforcing armor layers 24, 25, in particular an interior armor layer 24, applied on to the pressure vault 30 (or on the fluid permeation barrier layer 26 when the vault 30 is absent) and an exterior reinforcing amour layer 25 around which is disposed the exterior sheath 32.

Each armor layer 24, 25, includes longitudinal reinforcing armor elements 34 wound with a long pitch around the axis X-X' of the pipe 10.

The term "wound with a long pitch", is used to indicate that the absolute value of the helix angle is less than 60°, and is typically comprised between 25° and 55°.

The reinforcing armor elements 34 of a first armor layer 24 are generally wound at an angle in the opposite direction relative to the armor element 34 of a second armor layer 25. Thus, if the winding angle of the reinforcing armor element 34 of the first armor layer 24 is equal to +α, α being comprised between 25° and 55°, the winding angle of the reinforcing armor element 34 of the second amour layer 25 disposed in contact with the first armor layer 24 is for example -α, with α comprised between 25° and 55°.

Advantageously, and according to the desired use, each layer of reinforcing armor 24, 25 is provided with at least one anti-wear layer (not shown) on which the layer 24, 25 is supported. The anti-wear strip (not shown) is for example made of plastic.

The exterior sheath 32 is intended to prevent the permeation of fluid from the exterior of the flexible pipe 10 to the interior. It is advantageously made of a polymer material, in particular based on a polyolefin, such as polyethylene or polypropylene, based on a polyamide, such as the PA11 or PA12, or based on a fluorinated polymer such as polyvinylidene fluoride (PVDF).

The thickness of the exterior sheath 32 is for example comprised between 5 mm and 15 mm.

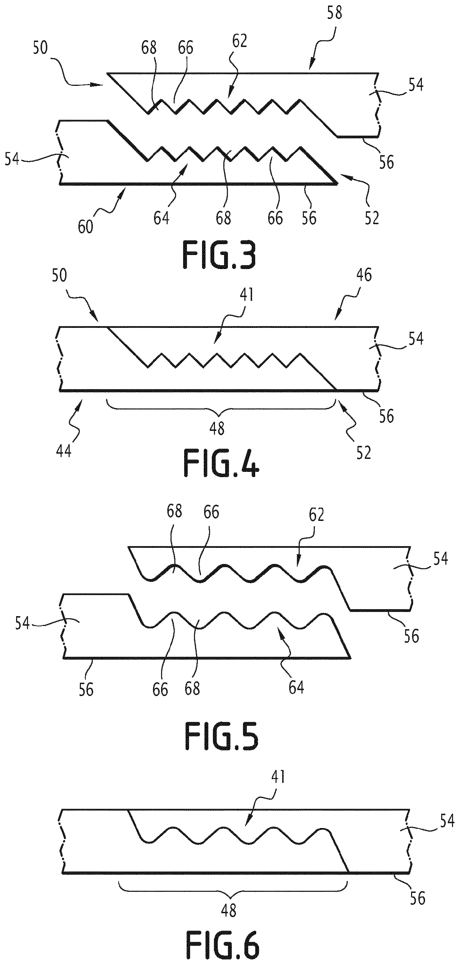

As illustrated in Figure 2, the fluid permeation barrier 26 comprises a fluid barrier tape 40 helically wound around the axis X-X' and, according to the invention, a latching system 41, visible in figure 4, for engaging together the edges of the fluid barrier tape 40.

The fluid permeation barrier 26 has a cylindrical shape of axis X-X' defining a cylindrical cavity 42. The cavity 42 extends along the axis X-X' between the upstream end and the downstream end of the flexible pipe 10.

The fluid barrier tape 40 comprises an interior surface 44 inwardly facing the cavity 42, and an exterior surface 46 facing outwardly.

The helical winding of the fluid barrier tape 40 defines an overlapping region 48. The overlapping region 48 extends along an exterior longitudinal edge 50 of the fluid barrier tape 40 and an interior longitudinal edge 52 of the fluid barrier tape 40.

The fluid barrier tape 40 is helically wound with a short pitch around the pressure sheath 20, that is to say, with a helix angle having an absolute value close to 90°, typically comprised between 75° and 90°.

The width of the overlapping region 48, taken parallel to axis X-X, is typically comprised between 2 cm and 10 cm, with a typical value of 6 cm.

The width of the fluid barrier tape 40 is advantageously selected according to the preferable pitch angle of the fluid barrier tape 40 and according to the preferable width for the overlapping region 48.

The fluid barrier tape 40 comprises at least a polymer layer 54 and a metal layer 56 assembled on the polymer layer 54.

In a variant (not shown), the fluid barrier tape 40 comprises two polymer layers 54 and one metal layer 56, inserted between the polymer layers 54 in a sandwich-like configuration.

In a variant (not shown), the fluid barrier tape 40 comprises at least a polymer layer 54 and a carbon layer 56. The carbon layer 56 is obtainable by Diamond-like Carbon depositions.

The polymer layer 54 is advantageously formed of a polyolefin, such as polyethylene and polypropylene; polyamide, such as polyamide-11 (PA-11) and polyamide-12 (PA-12); fluorinated polymer such as polyvinylidene fluoride (PVDF); polyimide (PI); polyurethanes (PU); polyureas; polyesters; polyacetals; polyethers, such as polyether sulphone (PES); polyoxides; polysulphides, such as polyphenylene sulphide (PPS); polysulphones, such as polyarylsulphone (PAS); polyacrylates; polyethylene terephthalate (PET); polyether-ether-ketones (PEEK); polyvinyls; polyacrylonitrils; polyetherketoneketone (PEKK); and co-polymers of the preceding.

Advantageously the polymer layer 54 is extruded.

The thickness of the polymer layer 54 is, for example, between 1 mm and 20 mm, and advantageously close to 12 mm.

The metal layer 56, for example, is applied at least on the interior surface 44 of the fluid barrier tape 40, and advantageously applied on the exterior longitudinal edge 50 and on the interior longitudinal edge 52 of the fluid barrier tape 40. The metal layer 56 is advantageously a metal film layer, such as aluminum film, stainless steel film, duplex film, titanium film, nickel film or chrome film.

The metal layer 56 of the fluid barrier tape 40 is for example a metal deposition layer obtainable advantageously by a deposition process, such as Chemical Vapor Deposition (CVD).

The thickness of the metal layer 56 is preferably below 1 mm, and advantageously between 0.01 µm and 500 µm.

As illustrated on Figure 3, the exterior edge 50 and the interior edge 52 of the fluid barrier tape 40 advantageously define complementary shoulders 58, 60.

The exterior edge 50 of the fluid barrier tape 40 comprises an interior facing shoulder 58.

The interior edge 52 of the fluid barrier tape 40 comprises an exterior facing shoulder 60.

The interior facing shoulder 58 comprises advantageously an interior latching surface 62.

The exterior facing shoulder 60 comprises advantageously an exterior latching surface 64.

The width of the interior facing shoulder 58 and of the exterior facing shoulder 60 are advantageously identical to the width of the overlapping region 48.

The thickness of the interior facing shoulder 58 and the exterior facing shoulder 60 is, for example, between 20% and 80% of the fluid barrier tape 40 thickness, and advantageously chosen as half the thickness of the fluid barrier tape 40.

As illustrated on Figure 4, advantageously, the exterior edge 50 and the interior edge 52 of the fluid barrier tape 40 are of complementary shape. The exterior facing surface 46 of the fluid permeation barrier layer 26 is advantageously flush between the overlapping region 48 and the adjacent regions. The interior facing surface 44 of the fluid permeation barrier layer 26 is also flush between the overlapping region 48 and the adjacent regions.

The latching system 41 comprises on each surface 62, 64 at least one latching protrusion 66 and at least one latching recess 68.

In the example of figure 3, the latching system 41 comprises a plurality of parallel and alternating latching protrusions 66 and latching recesses 68. The protrusion 66 and latching recesses 68 are advantageously parallel to the respective edges 50, 52 of the barrier tape.

Each protrusion 66 on one latching surface 62, 64 is of a complementary shape of a recess 68 on the opposite latching surface 64, 62.

The latching system 41 can be mounted from a disassembled configuration shown in Figure 3, where the edges 50, 52 of the overlapping region 48 are located apart from one another to an assembled configuration shown in Figure 4.

In the assembled configuration, each protrusion 66 on the exterior surface 64 is received in a corresponding complementary recess 68 in the interior latching surface 62.

Similarly, each protrusion 66 on the interior surface 62 is received in a corresponding complementary recess 68 in the exterior latching surface 64.

The interior latching surface 62 is applied on the exterior latching surface 64 and is latched thereto by the contact between the interior latching surface 62 and the exterior latching surface 64.

Fluid-tightness is therefore provided by the cooperation between the protrusions 66 and the recesses 68, creating a tortuous interface between the interior latching surface 62 and the exterior latching surface 64.

In the example shown in Figures 3 and 4, in a transverse cross section, the successive latching protrusions 66 and latching recesses 68 are of saw-tooth profile.

The assembly of the flexible pipe 10 according to the invention is carried out as follows.

Initially, an interlocked carcass 28 is produced. Onto the carcass 28, a polymer sheath 20 is extruded.

As illustrated on Figure 2, the fluid barrier tape 40 is helically wound onto the extruded pressure sheath 20. At the overlapping region 48, the exterior edge 50 of the fluid barrier tape 40 is placed over the interior edge 52 of the fluid barrier tape 40.

As illustrated on Figure 3, the shoulder 58 on the exterior edge 50 of the fluid barrier tape 40 is inserted in the complementary shoulder 60 on the interior edge 52 of the fluid barrier tape 40, latching at least one latching protrusion 66 into one latching recess 68.

The overlapping region 48 is flush with adjacent regions on the exterior surface 46 and on the interior surface 44.

Then, the first tensile armor layer 24 is helically wound with a long pitch around the fluid permeation barrier layer 26.

Subsequently, the second tensile armor layer 25 is helically wound, in an opposite fashion, with a long pitch around the first tensile armor layer 24.

Then, the exterior sheath 32 is extruded onto the outermost supporting layer.

In operation, when the fluid permeation barrier layer 26 is wrapped around the pressure sheath 20, the aggressive migrating species are confined by the metal layer 56 of the fluid barrier tape 40, within the cylindrical cavity 42 defined by the fluid permeation barrier layer 26.

Moreover, the fluid tightness of the overlapping region 48 is increased by the latching of the exterior edge 50 with the interior edge 52 of the fluid barrier tape 40 at the overlapping region 48, improving the capacity of the fluid permeation barrier layer 26 to confine the migrating species within the defined interior cylindrical cavity 42. Hence, the tensile armor layer 24, 25 and the optional pressure vault 30 are preserved from aggressive or corrosive species.

Moreover, the assembly of the flexible pipe 10 is simplified with a single additional step consisting of winding the fluid barrier tape 40 around the pressure sheath 20, ensuring a natural latching of the exterior edge 50 over the interior edge 52 at the overlapping region 48.

Thanks to the pipe 10 according to the invention and to the related manufacturing method described, it is possible to obtain a cheap and easy to install fluid permeation barrier layer 26, with a lean manufacturing line of the flexible pipe 10.

A fluid permeation barrier 26 of a second pipe 10 according to the invention is illustrated on Figure 5 and on Figure 6.

The fluid permeation barrier 26 of Figures 5 and 6 differs from the fluid permeation barrier 26 of Figures 3 and 4 in that the latching system 41 has protrusions 66 and recesses 68 with a rounded shape, for example a sine-shape.

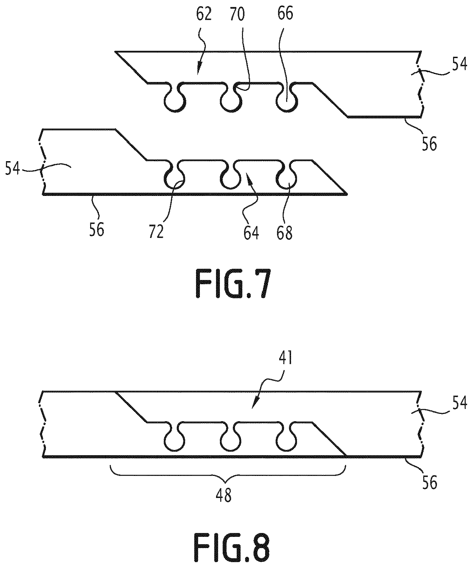

A fluid permeation barrier 26 of a third pipe 10 according to the invention is illustrated on Figure 7 and on Figure 8.

The fluid permeation barrier 26 of Figures 7 and 8 differs from the fluid permeation barrier 26 of Figures 3 and 4 in that the protrusions 66 are all located on one latching surface 62, 64 and the recesses 68 are all located on the other latching surface 64, 62.

Each latching protrusion 66 is thinner at the base and thicker at its free end, creating a protrusion undercut 70.

Each latching recess 68 is larger at depth and thinner at the surface creating a recess undercut 72.

In this case, the protrusion undercut 70 of the latching protrusion 66 and the recess undercut 72 of the latching recess 68 define a clip assembly.

The latching protrusion 66 is clipped in the latching recess 68 to maintain the edges 50, 52 together.

In a variant, an adhesive layer (not shown) is deposed on the interior latching surface 62 of the exterior edge 50 and/or on the exterior latching surface 60 of the interior edge 52 of the fluid barrier tape 40.

The adhesive is chosen for example among epoxies, polyurethanes, polyimides, etc. The form of the adhesive is in particular paste, liquid, film, pellets and tapes and the load carrying capacity is structural, semi-structural or non-structural types.

The adhesive layer is preferentially composed of a structural adhesive such as epoxies, cyanoacrylates and certain urethanes or acrylic adhesives.

The adhesive is applied by well-known processes such as hot melt process, reactive hot process or thermosetting process.

In another variant, the fluid barrier tape 40 is longitudinally folded onto the extruded pressure sheath 20. The overlapping region 48 is preferably latched along a longitudinal axis (not shown), co-linear with the axis X-X' of the flexible pipe 10.

In another variant (not shown), the fluid permeation barrier 26 is assembled directly on the carcass 28.

Advantageously, an intermediate tape is wounded around the carcass 28 (insulation tape or anti wear tape). The fluid permeation barrier 26 is interposed between the intermediate tape and the pressure sheath 20 to protect the fluid permeation barrier 26 from the carcass 28.

The pressure sheath 20 is then extruded onto the fluid permeation barrier 26.

In another variant (not shown), the flexible pipe 10 is of a smooth bore type and is free of any internal carcass 28. The innermost layer of the flexible pipe 10 is the extruded pressure sheath 20.

In another variant (not shown), a pressure vault 30 is helically wound with a short pitch around the fluid permeation barrier layer 26.

In another variant (not shown), a thermal insulation layer (not shown) is wound around the outermost tensile armor layer 24, 25.

In another variant (not shown), a second polymeric sheath, referred to as "sacrificial sheath", is interposed between the internal carcass 28 and the pressure sheath 20 in order to protect the pressure sheath 20 against the roughness of the internal carcass 28.

The sacrificial sheath is generally thinner than the pressure sheath. The fluid permeating barrier 26 is interposed between the sacrificial sheath and the pressure sheath 20.

## Claims

1. A flexible pipe (10) comprising:
- at least a sheath (20) defining a central passage (16) for conveying fluids,
- at least a reinforcing layer (24, 25) around the sheath (20),
- at least a fluid permeation barrier (26) comprising a fluid barrier tape (40), the fluid barrier tape (40) having a cylindrical shape and defining at least an overlapping region (48) between an exterior edge (50) of the fluid barrier tape (40) and an interior edge (52) of the fluid barrier tape (40),
**characterized by** a latching system (41), latching an exterior surface (46) of the overlapping region (48) to an interior surface (44) of the overlapping region (48).

2. A flexible pipe (10) according to claim 1, wherein the exterior edge (50) of the overlapping region (48) comprises at least one protrusion (66) and wherein the interior edge (52) of the overlapping region (48) comprises at least one recess (68).

3. A flexible pipe (10) according to claim 2, wherein at least one protrusion (66) is clipped in at least one recess (68).

4. A flexible pipe (10) according to any one of the preceding claims, wherein the exterior surface (46) of the overlapping region (48) defines an exterior shoulder (60) and the interior surface (44) of the overlapping region (48) defines an interior shoulder (58), the exterior shoulder (60) being engaged in the interior shoulder (58).

5. A flexible pipe (10) according to any one of the preceding claims, wherein the overlapping region (48) is flush with adjacent regions on the exterior surface (46) and on the interior surface (44).

6. A flexible pipe (10) according to any one of the preceding claims, wherein the fluid barrier tape (40) comprises at least a polymer layer (54) and a metal layer (56) applied on at least one surface of the polymer layer (54).

7. A flexible pipe (10) according to claim 6, wherein the metal layer (56) is obtainable by Chemical Vapor Deposition.

8. A flexible pipe (10) according to any one of the preceding claims, wherein the latching system (41) comprises an adhesive layer fixing the exterior surface (46) of the overlapping region (48) to the interior surface (44) of the overlapping region (48).

9. A flexible pipe (10) according to any one of the preceding claims, wherein the reinforcing layer (24, 25) is helically wound around the sheath (20).

10. A flexible pipe (10) according to any one of the preceding claims, wherein the reinforcing layer (24, 25) comprises at least one layer of wires (34).

11. A flexible pipe (10) according to any one of the preceding claims, comprising at least two unbonded layers.

12. A method for manufacturing a flexible pipe (10), said method including:
- providing a sheath (20) defining a central passage (16) for conveying fluids,
- providing at least a reinforcing layer (24, 25) around the sheath (20),
- providing at least a fluid permeation barrier (26) comprising a fluid barrier tape (40), the fluid barrier tape (40) having a cylindrical shape and defining at least an overlapping region between (48) an exterior edge (50) of the fluid barrier tape (40) and an interior edge (52) of the fluid barrier tape (40),
**characterized by** latching an exterior surface (46) of the overlapping region (48) to an interior surface (44) of the overlapping region (48) by a latching system (41).

13. A method according to claim 12, comprising winding the fluid barrier tape (40) around the sheath (20).

14. A method according to any one of claims 12 or 13, wherein the exterior edge (50) of the overlapping region (48) comprises at least one protrusion (66) and wherein the interior edge (52) of the overlapping region (48) comprises one recess (68), said method comprising inserting at least one protrusion (66) of the exterior edge (50) in at least one recess (68) of the interior edge (52) at the overlapping region (48).

## Patentansprüche

1. Flexibles Rohr (10), aufweisend:
- wenigstens eine Hülle (20), die eine zentrale Passage (16) zum Fördern von Fluiden definiert,
- wenigstens eine Verstärkungsschicht (24, 25) um die Hülle (20) herum,
- wenigstens eine Fluid-Permeations-Barriere (26), die ein Fluid-Barriere-Band (40) aufweist, wobei das Fluid-Barriere-Band (40) eine zylindrische Gestalt hat und wenigstens einen Überlappungsbereich (48) zwischen einem äußeren Rand (50) des Fluid-Barriere-Bands (40) und einem inneren Rand (52) des Fluid-Barriere-Bands (40) definiert,
**gekennzeichnet durch** ein Arretierungssystem (41), das eine äußere Fläche (46) des Überlappungsbereichs (48) an einer inneren Fläche (44) des Überlappungsbereichs (48) arretiert.

2. Flexibles Rohr (10) gemäß Anspruch 1, wobei der äußere Rand (50) des Überlappungsbereichs (48) wenigstens einen Vorsprung (66) aufweist, und wobei der innere Rand (52) des Überlappungsbereichs (48) wenigstens eine Aussparung (68) aufweist.

3. Flexibles Rohr (10) gemäß Anspruch 2, wobei wenigstens ein Vorsprung (66) in wenigstens eine Aussparung (68) geklippt ist.

4. Flexibles Rohr (10) gemäß irgendeinem der vorhergehenden Ansprüche, wobei die äußere Fläche (46) des Überlappungsbereichs (48) eine äußere Schulter (60) definiert und die innere Fläche (44) des Überlappungsbereichs (48) eine innere Schulter (58) definiert, wobei die äußere Schulter (60) mit der inneren Schulter (58) im Eingriff ist.

5. Flexibles Rohr (10) gemäß irgendeinem der vorhergehenden Ansprüche, wobei der Überlappungsbereich (48) bündig ist mit benachbarten Bereichen an der äußeren Fläche (46) und an der inneren Fläche (44).

6. Flexibles Rohr (10) gemäß irgendeinem der vorhergehenden Ansprüche, wobei das Fluid-Barriere-Band (40) wenigstens eine Polymerschicht (54) und eine Metallschicht (56) aufweist, die auf wenigstens eine Fläche der Polymerschicht (54) aufgebracht ist.

7. Flexibles Rohr (10) gemäß Anspruch 6, wobei die Metallschicht (56) durch Chemisch-Dampf-Abscheidung erlangt werden kann.

8. Flexibles Rohr (10) gemäß irgendeinem der vorhergehenden Ansprüche, wobei das Arretierungssystem (41) eine Klebeschicht aufweist, die die äußere Fläche (46) des Überlappungsbereichs (48) an der inneren Fläche (44) des Überlappungsbereichs (48) fixiert.

9. Flexibles Rohr (10) gemäß irgendeinem der vorhergehenden Ansprüche, wobei die Verstärkungsschicht (24, 25) wendelförmig um die Hülle (20) herum gewunden ist.

10. Flexibles Rohr (10) gemäß irgendeinem der vorhergehenden Ansprüche, wobei die Verstärkungsschicht (24, 25) wenigstens eine Schicht Drähte (34) aufweist.

11. Flexibles Rohr (10) gemäß irgendeinem der vorhergehenden Ansprüche, aufweisend wenigstens zwei ungebundene Schichten.

12. Verfahren zum Herstellen eines flexiblen Rohrs (10), wobei das Verfahren aufweist:
- Bereitstellen einer Hülle (20), die eine zentrale Passage (16) zum Fördern von Fluiden definiert,
- Bereitstellen wenigstens einer Verstärkungsschicht (24, 25) um die Hülle (20) herum,
- Bereitstellen wenigstens einer Fluid-Permeations-Barriere (26), die ein Fluid-Barriere-Band (40) aufweist, wobei das Fluid-Barriere-Band (40) eine zylindrische Gestalt hat und wenigstens einen Überlappungsbereich (48) zwischen einem äußeren Rand (50) des Fluid-Barriere-Bands (40) und einem inneren Rand (52) des Fluid-Barriere-Bands (40) definiert,
**gekennzeichnet durch** Arretieren einer äußeren Fläche (46) des Überlappungsbereichs (48) an einer inneren Fläche (44) des Überlappungsbereichs (48) mittels eines Verriegelungssystems (41) .

13. Verfahren gemäß Anspruch 12, aufweisend Winden des Fluid-Barriere-Bands (40) um die Hülle (20).

14. Verfahren gemäß irgendeinem der Ansprüche 12 oder 13, wobei der äußere Rand (50) des Überlappungsbereichs (48) wenigstens einen Vorsprung (66) aufweist, und wobei der innere Rand (52) des Überlappungsbereichs (48) eine Aussparung (68) aufweist, wobei das Verfahren aufweist Einsetzen wenigstens eines Vorsprungs (66) des äußeren Rands (50) in wenigstens eine Aussparung (68) des inneren Rands (52) in dem Überlappungsbereich (48).

## Revendications

1. Tuyau souple (10) comprenant :
au moins une gaine (20) définissant un passage central (16) pour transporter des fluides,
au moins une couche de renforcement (24, 25) autour de la gaine (20),
au moins une barrière de perméation de fluide (26) comprenant une bande de barrière de fluide (40), la bande de barrière de fluide (40) ayant une forme cylindrique et définissant au moins une région de chevauchement (48) entre un bord extérieur (50) de la bande de barrière de fluide (40) et un bord intérieur (52) de la bande de barrière de fluide (40),
**caractérisé par** un système de verrouillage (41), verrouillant une surface extérieure (46) de la région de chevauchement (48) sur une surface intérieure (44) de la région de chevauchement (48).

2. Tuyau souple (10) selon la revendication 1, dans lequel le bord extérieur (50) de la région de chevauchement (48) comprend au moins une saille (66) et dans lequel le bord intérieur (52) de la région de chevauchement (48) comprend au moins un évidement (68).

3. Tuyau souple (10) selon la revendication 2, dans lequel au moins une saillie (66) est attachée dans au moins un évidement (68).

4. Tuyau souple (10) selon l'une quelconque des revendications précédentes, dans lequel la surface extérieure (46) de la région de chevauchement (48) définit un épaulement extérieur (60) et la surface intérieure (44) de la région de chevauchement (48) définit un épaulement intérieur (58), l'épaulement extérieur (60) étant mis en prise dans l'épaulement intérieur (58).

5. Tuyau souple (10) selon l'une quelconque des revendications précédentes, dans lequel la région de chevauchement (48) est de niveau avec les régions adjacentes sur la surface extérieure (46) et sur la surface intérieure (44).

6. Tuyau souple (10) selon l'une quelconque des revendications précédentes, dans lequel la bande de barrière de fluide (40) comprend au moins une couche polymère (54) et une couche métallique (56) appliquée sur au moins une surface de la couche polymère (54).

7. Tuyau souple (10) selon la revendication 6, dans lequel la couche métallique (56) peut être obtenue par dépôt chimique en phase vapeur.

8. Tuyau souple (10) selon l'une quelconque des revendications précédentes, dans lequel le système de verrouillage (41) comprend une couche adhésive fixant la surface extérieure (46) de la région de chevauchement (48) sur la surface intérieure (44) de la région de chevauchement (48).

9. Tuyau souple (10) selon l'une quelconque des revendications précédentes, dans lequel la couche de renforcement (24, 25) est enroulée de manière hélicoïdale autour de la gaine (20).

10. Tuyau souple (10) selon l'une quelconque des revendications précédentes, dans lequel la couche de renforcement (24, 25) comprend au moins une couche de fils (34).

11. Tuyau souple (10) selon l'une quelconque des revendications précédentes, comprenant au moins deux couches non reliées.

12. Procédé pour fabriquer un tuyau souple (10), ledit procédé comprenant les étapes consistant à :
prévoir une gaine (20) définissant un passage central (16) pour transporter des fluides,
prévoir au moins une couche de renforcement (24, 25) autour de la gaine (20),
prévoir au moins une barrière de perméation de fluide (26) comprenant une bande de barrière de fluide (40), la bande de barrière de fluide (40) ayant une forme cylindrique et définissant au moins une région de chevauchement (48) entre un bord extérieur (50) de la bande de barrière de fluide (40) et un bord intérieur (52) de la bande de barrière de fluide (40),
**caractérisé par** l'étape consistant à verrouiller une surface extérieure (46) de la région de chevauchement (48) sur une surface intérieure (44) de la région de chevauchement (48) par un système de verrouillage (41).

13. Procédé selon la revendication 12, comprenant l'étape consistant à enrouler la bande de barrière de fluide (40) autour de la gaine (20).

14. Procédé selon l'une quelconque des revendications 12 ou 13, dans lequel le bord extérieur (50) de la région de chevauchement (48) comprend au moins une saillie (66) et dans lequel le bord intérieur (52) de la région de chevauchement (48) comprend un évidement (68), ledit procédé comprenant l'étape consistant à insérer au moins une saillie (66) du bord extérieur (50) dans au moins un évidement (68) du bord intérieur (52) sur la région de chevauchement (48).
